# EUROPÄISCHE PATENTSCHRIFT

(11) **EP 2 615 440 B1**
(45) Veröffentlichungstag und Bekanntmachung des Hinweises auf die Patenterteilung: **12.08.2015**
(21) Anmeldenummer: 10857056.5
(22) Anmeldetag: 07.09.2010
(51) Int. Cl.: G01H 17/00, G06T 15/00, G01M 5/00, G01M 7/00

(54) **VERFAHREN FÜR DIE REKONSTRUKTION EINES DREIDIMENSIONALEN MODELLS DES PHYSIKALISCHEN ZUSTANDES EINES BEOBACHTUNGSOBJEKTS AN EINEM MESSUNGSPUNKT**
METHOD FOR RECONSTRUCTING A THREE-DIMENSIONAL MODEL OF THE PHYSICAL STATE OF A MONITORING OBJECT AT A MEASUREMENT POINT
PROCÉDÉ DE RECONSTRUCTION D'UN MODÈLE TRIDIMENSIONNEL DE L'ÉTAT PHYSIQUE D'UN OBJET À OBSERVER EN UN POINT DE MESURE

(43) Veröffentlichungstag der Anmeldung: 17.07.2013
(73) Patentinhaber: Advanced Vector Analytics SIA, 1067 Riga (LV)
(72) Erfinder: PROKHOROV, Alexander Igorevich, Moscow 115304 (RU); SPERANSKIY, Anatoly Alekseevich, Moscow, 105082 (RU)
(74) Vertreter: Jeck, Anton
(86) Internationale Anmeldenummer: PCT/RU2010/000484
(87) Internationale Veröffentlichungsnummer: WO 2012/033425

(56) Entgegenhaltungen:
- RU-C1- 2 250 445
- RU-C1- 2 371 691
- RU-C2- 2 187 086
- RU-C2- 2 327 105

## Beschreibung

Die Erfindung betrifft ein Verfahren zur Rekonstruktion eines dreidimensionalen Bildes der physikalischen Beschaffenheit eines zu beobachtenden Gegenstands in einem Messpunkt nach dem Oberbegriff des Anspruchs 1.

Die Erfindung ist in der Kontinuumsmechanik und insbesondere bei Verfahren zur Rekonstruktion eines dreidimensionalen Bildes der physikalischen Beschaffenheit eines zu beobachtenden Gegenstands in einem Messpunkt einsetzbar. Die Erfindung dient dazu, Spannungsdehnungsverhalten von Objekten mechanischer Systeme zu beurteilen. Sie kann zur Auswertung und Voraussage der technischanthropogenen Sicherheit benutzt werden.

Aus dem Stand der Technik (RU 2250445) ist ein Verfahren zur Erfassung von Verformungsverhalten bekannt. Nach diesem Verfahren werden die Prüfparameter des Zustands von Elementen eines zu untersuchenden Gegenstands mit Hilfe von Schwingungsgebern gemessen, wobei diese in Richtungen ausgerichtet werden, und zwar senkrecht, quer und längs. Die Messdaten werden in Form einer digitalisierten Zeitamplituden-Beschleunigungskennlinie in einem Rechner abgespeichert und danach mit Hilfe einer Fourier-Transformation ausgewertet, um Frequenz-Amplituden-Kurven zu erhalten.

Die Nachteile dieses Verfahrens sind:
1. Die räumlichen Verformungsparameter stehen aufgrund der Grundgesetze der Mechanik in Zusammenhang miteinander und werden in den Messpunkten mit Hilfe von einer Gesamtheit der Skalarmessmittel gemessen. Die Skalarmessmittel werden in drei senkrecht zueinander stehenden Richtungen angeordnet. Dabei sind diese Skalarmessmittel räumlich voneinander getrennt. Dies verringert die Messgenauigkeit der gemessenen Verformungsprüfparameter.
2. Die Verarbeitung von systemmäßig nichtgebundenen, gemessenen und digitalisierten Zeitamplituden-Beschleunigungskennlinien unter Einsatz der Fourier-Transformation ergibt dementsprechend systemmäßig nichtgebundene Frequenz-Amplituden-Kurven. Das verfälscht die Ergebnisse der Fourier-Analyse, der statistischen und der Korrelationsanalyse. Diese Ergebnisse stimmen mit den beobachteten physikalischen Vorgängen und den Erscheinungen in den zu untersuchenden Gegenständen nicht mehr überein.
3. Die wichtigste Charakteristik der systemmäßig zusammenhängenden und im Grunde genommen wellenartigen Schwingungsvorgänge ist die Schwingungsphase der Prüfparameter. Während der Messung (Monitoring) und der Verarbeitung (Rekonstruktion) wird sie jedoch nicht berücksichtigt. Um eine richtige Bewertung des Verformungszustands der Objekte der mechanischen Systeme zu erhalten, müssen systemmäßig zusammenhängende raumzeitliche Amplitudenphasenfrequenzkennlinien gebildet werden. Es handelt sich dabei um spektrale Verformungshodographen, die unter Anwendung von Vektor-Phasen-Verfahren in einer Messdatenverarbeitung erzielt werden.
4. Die Lage der Messpunkte wird bei diesem Verfahren dem kybernetischen Bild eines 3D-Modells des zu beobachtenden Gegenstands nicht angepasst. Dies abstrahiert das Messsystem vom Zustand des Gegenstands.
5. Das Verfahren sieht keine Beurteilung des natürlichen physikalischen Zusammenhangs zwischen den gemessenen Prüfparametern der Verformungen und den sie erzeugenden raumzeitlichen Einflussfaktoren vor. Das vermindert wesentlich die Wirksamkeit des Verfahrens.

Die nächstkommende technische Lösung im Vergleich zur Erfindung ist ein Verfahren zur Rekonstruktion eines dreidimensionalen Bildes der physikalischen Beschaffenheit eines zu beobachtenden Gegenstands in einem Messpunkt nach dem Patent RU 2371691 vom 22.04.2008. Dieses Verfahren umfasst die Messung mit Hilfe von wenigstens einem Messmittel zur Messung von räumlichen Schwingungen, welches drei orthogonale Projektionen eines Beschleunigungsvektors simultan misst, eine Ermittlung eines umfassenden Spektrums der Frequenz-Amplituden- und Phasen-Daten über einen Verformungszustandsvektor des zu beobachtenden Gegenstands in einem Messpunkt, eine Sammlung von einem Feld der Verformungsvektorgrößen und die Darstellung eines visuellen Bildes der räumlichen Verformungen in Messpunkten auf einem Bildschirm.

Der Mangel dieses Verfahrens ist, dass es nicht möglich ist, die physikalische Beschaffenheit der zu beobachtenden Gegenstände zuverlässig zu bewerten. Dies liegt daran, dass in diesem Verfahren nur ein Prüfparameter (Verformung) räumlich und zeitlich herangezogen wird, um ein Spannungsdehnungsverhalten zu charakterisieren.

Es ist Aufgabe der Erfindung, ein Verfahren zu schaffen, das die Aussagekraft und Gültigkeit der Bewertung der physikalischen Beschaffenheit von zu beobachtenden Gegenständen erhöht.

Das Verfahren zur Rekonstruktion eines dreidimensionalen Bildes der physikalischen Beschaffenheit eines zu beobachtenden Gegenstands in einem Messpunkt geht davon aus und umfasst:
- Messung mit Hilfe von wenigstens einem Messmittel zur Messung von räumlichen Schwingungen, welches drei orthogonale Projektionen eines Beschleunigungsvektors gleichzeitig misst,
- Ermittlung von einem umfassenden Spektrum der Frequenz-Amplituden- und Phasen-Daten über einen Verformungszustandsvektor des zu beobachtenden Gegenstands in einem Messpunkt,
- Erfassung von einem Feld der Verformungsvektorgrößen und
- Darstellung eines visuellen Bildes der räumlichen Verformungen in Messpunkten auf einem Bildschirm.

Gemäß der Erfindung werden die Daten über das Verformungsvektorspektrum in eine Recheneinheit für Spannungsdehnungs-Korrelationen vor der Darstellung des visuellen Bildes auf dem Bildschirm eingegeben. In der Recheneinheit für Spannungsdehnungs-Korrelationen wird eine analytische Synthese einer 3D-Überlagerung eines Spannungsfelds anhand festlegender Gleichungen für eine Ursache-Wirkung-Beziehung der Kenngrößen der Grundgesetze der Mechanik gleichzeitig mit den Messungen vorgenommen. Die analytische Synthese beruht auf dem Hookeschen und dem Poissonschen Gesetz für einen Messfühler des Messmittels zur Messung von räumlichen Schwingungen und erfolgt mittels einer Umkehr-Tensortransformation der 3D-Überlagerung des Verformungs(mess)-Bereichs der Messpunkte. Das Feld der Vektor-Spannungsgrößen wird erfasst. Das visuelle Bild wird in Form von einem räumlichen dreidimensionalen Diagramm physikalischer Beschaffenheit des zu beobachtenden Gegenstands in einem Messpunkt auf dem Bildschirm der Recheneinheit dargestellt. Anhand dieses Diagramms wird dann eine Diagnose des Spannungsdehnungsverhaltens des zu beobachtenden Gegenstands durchgeführt.

Das Wesen des angemeldeten Verfahrens wird anhand der Zeichnungen näher erläutert. Es zeigen:
- Fig. 1: das räumliche dreidimensionale Diagramm (Kennbild) der physikalischen Beschaffenheit des zu beobachtenden Gegenstands in einem Messpunkt,
- Fig. 2: ein Übersichtsschaltbild der Einrichtung zur Ausführung des erfindungsgemäßen Verfahrens,
- Fig. 3: die zeitliche Verlaufsmesskurve der elektrischen Spannungen während der Beobachtung des Gegenstands nach dem Prototypverfahren,
- Fig. 4: die Verlaufsmesskurve für zeitliche Verschiebung, die während der Beobachtung des Gegenstands nach dem erfindungsgemäßen Verfahren ermittelt wurde und
- Fig. 5: eine Härte-Verlaufsmesskurve, die während der Beobachtung nach einem genormten Verfahren (Prellschlag-Verfahren) ermittelt worden ist.

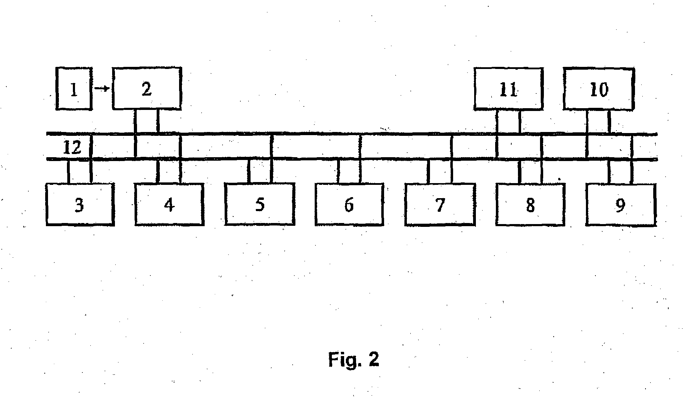

Das Übersichtsschaltbild der Einrichtung nach Fig. 2 umfasst:
Eine Einheit 1 - Messmittel zur Messung von räumlichen Schwingungen. Es handelt sich dabei um einen 3D-Empfänger, der im Patent RU 2383025 offenbart ist. Das Messmittel misst sämtliche Bestandteile eines Vektors absolut synchron und ermöglicht, ein vollständiges Spektrum der Frequenz-Amplituden- und Phasen-Daten über einen Verformungszustandsvektor des zu beobachtenden Gegenstands zu erhalten. Das Messmittel ist mit dem Eingang einer Einheit 2 verbunden.
Eine Einheit 2 bildet Dreikanal-Einheiten zur Anpassung, Simultanübertragung, Analog-Digital-Umsetzung und Eingabe der Verformungsgrößen in einen Messwertrechner für die gemessenen Bestandteile.
Eine Einheit 3 ist ein digitaler Speicher für die gemessenen Bestandteile der Verformungsgrößen.
Eine Einheit 4 ist für eine Spektralbearbeitung und eine Normierung der Bestandteile der gemessenen Verformungsgrößen vorgesehen.
Eine Einheit 5 ist für eine spektrale Rekonstruktion von raumzeitlichen elliptischen Hodographen der Verformungsgrößen in den Messpunkten vorgesehen.
Eine Einheit 6 ist zur Rekonstruktion von Entwurfsparametern eines 3D-Modells des zu beobachtenden Gegenstands vorgesehen.
Eine Einheit 7 ist für Spannungsdehnungs-Korrelationen vorgesehen. Hier erfolgt eine Umkehr-Tensortransformation eines Spektrums der Verformungsvektoren in das Spektrum der Spannungsvektoren.
Eine Einheit 8 ist eine Visualisierungseinheit für Prüfparameter.
Eine Einheit 9 ist eine Dokumentationseinheit.
Eine Einheit 10 ist für einen Systemtakt der Messungen und Berechnungen in Echtzeit vorgesehen.
Eine Einheit 11 ist zur Gestaltung einer systemumfassenden Zusammenwirkung sämtlichen Einheiten vorgesehen.

Dabei erfolgt die Datenübertragung sowie die Steuerung mit Hilfe von Busleitungen 12. Ausgänge der Einheiten 2 bis 10 sind an die Busleitungen 12 angeschlossen.

Die Einheiten 2 bis 10 und die in der Einrichtung eingesetzte Software sind handelsüblich und sind in LabVffiW SignalExpress National Instruments beschrieben.

Das Wesen des erfindungsgemäßen Verfahrens ist:

Drei orthogonale Projektionen des Beschleunigungsvektors werden gleichzeitig mit Hilfe von wenigstens einem Messmittel 1 zur Messung von räumlichen Schwingungen gemessen. Es wird ein vollständiges Spektrum der Frequenz-Amplituden- und Phasen-Daten über einen Verformungszustandsvektor des zu beobachtenden Gegenstands in einem Messpunkt ermittelt. Dieses wird in die Einheit 2 zur weiteren Bearbeitung übertragen. Das Feld der Verformungsvektorgrößen wird in der Einheit 3 gesammelt. Das erfasste Feld der Verformungsvektorgrößen wird der Spektralbearbeitung und Normierung in der Einheit 4 unterzogen. Danach gelangen die Daten über das Feld der Verformungsvektorgrößen in die Einheit 5. Hier erfolgt die Rekonstruktion der raumzeitlichen elliptischen Hodographen. Diese sind spektrale Prüfparameter, welche den linearen Größenverlauf des Kontinuums des zu beobachtenden Gegenstands in den Messpunkten darstellen. Das dreidimensionale Entwurfsmodell des zu beobachtenden Gegenstands wird in der Einheit 6 rekonstruiert. In der Einheit 7 für die Spannungsdehnungs-Korrelationen wird die analytische Synthese der 3D-Überlagerung des Spannungsfelds anhand festliegender Gleichungen für die Ursache-Wirkung-Beziehung der Kenngrößen nach den Grundgesetzen der Mechanik simultan mit den Messungen vorgenommen. Die analytische Synthese ist durch das Hookesche und das Poissonsche Gesetz für einen Messfühler des Messmittels zur Messung von räumlichen Schwingungen begründet. Eine Synthese erfolgt mittels der Umkehr-Tensortransformation der 3D-Überlagerung des Verformungsmessbereichs der Messpunkte.

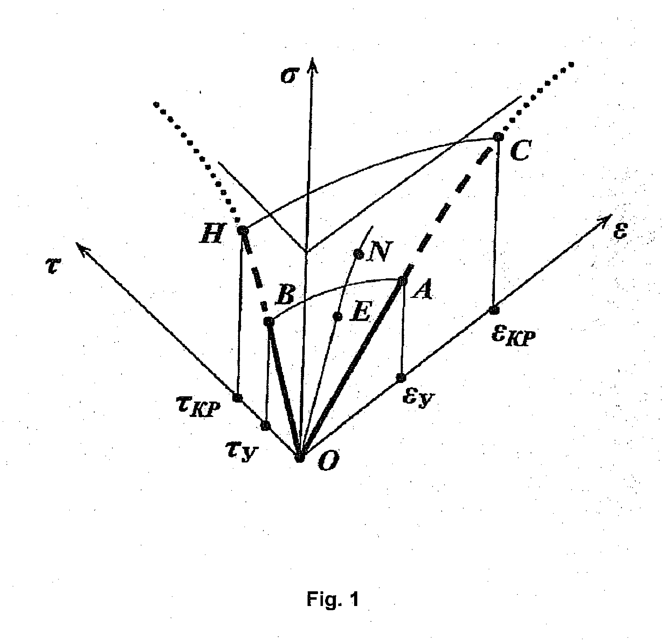

Die Grundgesetze legen eine umkehrbar eindeutige Zuordnung der Ursache und Wirkung fest. Bei der Ursache handelt es sich um eine lineare oder verteilte Lastgröße, wie eine Spannung, die den zu beobachtenden Gegenstand beeinflusst. Die Wirkung stellt dabei innere Kräfte und elastische Verformungen dar, die dreidimensional und massenabhängig im Medium des zu beobachtenden Gegenstands verteilt sind. Die inneren Kräfte und elastischen Verformungen bilden gemeinsam dabei eine Triade der Einflussgrößen der energetischen Natur der Festigkeit. Dabei legt das Hookesche Gesetz die Zuordnung der Linearspannungen σ und der normalen Zug-Druck-Verformungen in Übereinstimmung mit dem Hookeschen Gesetz σ = εE fest. Das Poissonsche Gesetz T = γG legt die Zuordnung der linearen Verformungen γ und der tangentialen Scher-Deformationen τ fest. Beide Gesetze beschreiben tatsächliche physikalische Vorgänge und haben in der Mechanik ihre eigene Bedeutung. Sie stützen sich auf grundlegende Gesetze und allgemeine Grundsätze der Kontinuumsmechanik. Deswegen und unter Berücksichtigung der Kontinuitäts- und der Überlagerungsgrundsätze ist die Verteilung der elastischen Verformungen unter Normalspannungen in kartesischen Koordinaten als eine kontinuierliche normaltangentiale räumliche Verteilung gestaltet (Fig. 1). Zwei Extreme dieser Verteilung sind als Hookesches Gesetz (Normalebene σθε) und Poissonsches Gesetz (Tangentialebene σθτ, die orthogonal zur Normalebene liegt) bekannt.

Danach wird das Feld der Vektor-Spannungsgrößen erfasst. Das visuelle Bild in Form von einem räumlichen dreidimensionalen Diagramm der physikalischen Beschaffenheit des zu beobachtenden Gegenstands in einem Messpunkt wird auf dem Bildschirm des Computers (in Einheit 8) dargestellt. Anhand dieses Diagramms wird dann die Diagnose des Spannungsdehnungsverhaltens des zu beobachtenden Gegenstands durchgeführt.

Der Systemtakt der Bestandteile von gemessenen und rekonstruierbaren Parametern in Echtzeit ist für die Zuverlässigkeit des visuellen Bildes der räumlichen Verformungen und seine Übereinstimmung (Adequat) mit den beobachteten Vorgängen wichtig. Dieser Systemtakt läuft in den Einheiten 10 und 11 ab.

Die Physik des Spannungsdehnungsverhaltens des zu beobachtenden Gegenstands ist in dem Diagramm (Fig. 1) durch Linearabschnitte der elastischen Verformungen OA und OB und Abschnitte der elastisch-plastischen Dehnungen AC und BH dargestellt. Dabei sind die Punkte C und H die Grenzen der kritischen Verformungen. Die Koeffizienten der Ursache-Wirkung-Transformationen geben den Systemcharakter wieder und sind mittels einer dem Tensor tensoriell entsprechenden Matrix verbunden. Daher ergab sich aufgrund der der natürlichen Synthese entsprechend gemessenen spektralen Menge der Bestandteile der Verformungsverktoren mittels der physikalischen Umkehr-Tensortransformation mit Hilfe der Messmittel zur Messung der räumlichen Schwingungen die objektive Möglichkeit der zuverlässigen Vektor-Phasen-Analyse und Rekonstruktion der berechneten Spektralmenge der Bestandteile der Spannungsvektoren in begründet gewählten Messpunkten des Umfangs oder der Konturoberfläche des zu beobachtenden Gegenstands.

Die dreidimensionale Vektor-Phasen-Rekonstruktion der Prüfparameter in Messpunkten der Echtzeit im Bereich der unterkritischen Zustände O-A-C-H-B-O der Konturoberfläche des zu beobachtenden Gegenstands ermöglicht es, mit Hilfe von bekannten computergestützten und graphischen Verfahren die Abweichung des aktuellen Zustands vom Entwurfszustand zu analysieren. So liegt z. B. Punkt E im elastischen Bereich und Punkt N im elastisch-plastischen Bereich mit einer bestimmten Reserve in Bezug auf die Grenzzustände CH. Um die Analyse zu vereinfachen, kann die raumzeitliche Rekonstruktion des Bereichs der unterkritischen Zustände O-A-C-H-B-O sichtbar auf einem Bildschirm (Einheit 8) dargestellt oder dokumentiert (Einheit 9) werden.

Ein konkreter Punkt auf dem räumlichen dreidimensionalen Diagramm der physikalischen Beschaffenheit des zu beobachtenden Gegenstands in einem Messpunkt ist neben den allgemeingültigen Prüfparametern jedem gemessenen bzw. approximierten Punkt der Konturoberfläche des zu beobachtenden Gegenstands, jedem Zeitpunkt auf jeder Frequenz des Spektrums eindeutig zugeordnet. Dieses Diagramm hat zum ersten Mal das Hookesche und Poissonsche Gesetz in einer zusammenhängenden Art und Weise dargestellt. Das gibt die natürlichen Gesetzmäßigkeiten der Festigkeitsmechanik wieder und bringt Normalspannungen und Normal- sowie Tangentialverformungen zusammen. Diese sind ihrerseits Phasenparameter der festlegenden Zusammenhangsgleichungen der Grundgesetze. Die Nähe des Messpunkts zur Grenze des elastisch-plastischen Dehnungsbereichs erlaubt es, das aktuelle Niveau der lebensdauer- und festigkeitsbezogenen Betriebsgrößen der konstruktionsmäßigen Festigkeit zu beurteilen.

Dieses Diagramm kann neben der Darstellung in σετ-Koordinaten auch in einer beliebigen Gesamtheit der physikalischen Zustandsparameter des zu beobachtenden Gegenstands dargestellt werden.

Beispiel für eine Ausführung des Verfahrens:

Einer der praktischen Nachweise des Nutzeffekts des erfindungsgemäßen Verfahrens ist die Beobachtung des Änderungsverlaufs der Festigkeitseigenschaften während der Erhärtung eines künstlichen Zement-Verbundsteins (Beton). Dieses Ziel wird meistens mit Hilfe eines indirekten Verfahrens, wie Prellschlag-Verfahren und Schlagimpulsverfahren, erreicht. Die grundsätzliche Besonderheit der genannten Verfahren zur Bewertung von Festigkeitseigenschaften der Materialien ist, dass die eigentlich direkt messbare Größe nicht die Festigkeit, sondern die damit korrelierte Oberflächenhärte ist. Die Oberflächenhärte ist der Festigkeit durch einen Kalibrierzusammenhang zugeordnet. Dabei ist die Materialfestigkeit die indirekt proportionale Größe in Bezug auf eine elastische Teilchenverschiebung unter Einfluss harmonischer Störungen. Die schnelle Festigkeitsbewertung nach dem Schlag- Impulsverfahren , und zwar nach dem Einpunkt-Testen unter Einsatz einer konventionellen Modalanalyse, ist ebenfalls indirekt und ergibt keine Parameter bis auf eine statistische Durchschnittshärte in der Rückprallrichtung des Schlagstücks. Rüttelverfahren beruhen auf einer Direktmessung von mechanischen Reaktionen auf die Einwirkungen. Diese waren bis jetzt im Bauwesen wegen ihrer geringen Aussagekraft und Zuverlässigkeit die am meisten verbreiteten Einkomponenten-Schwingungsgeber und praktisch gar nicht gefragt.

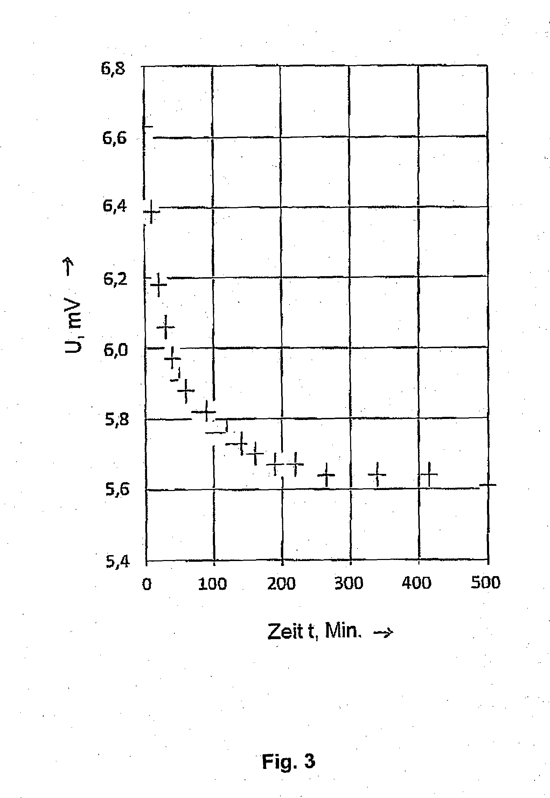

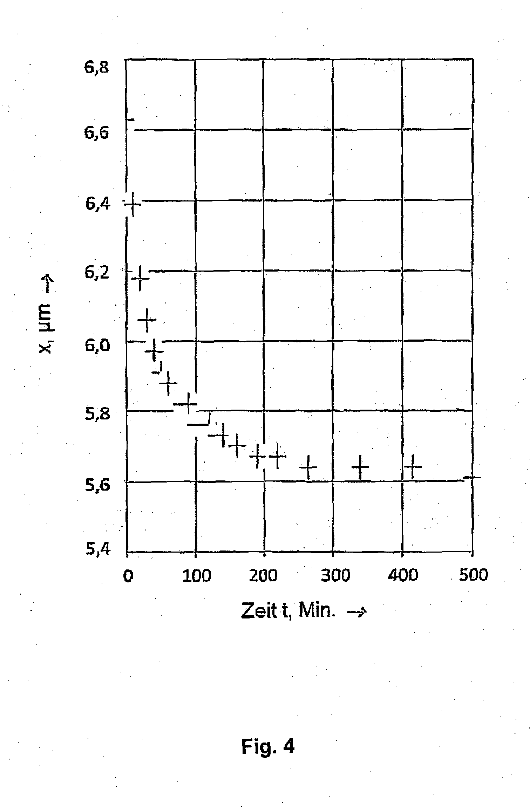

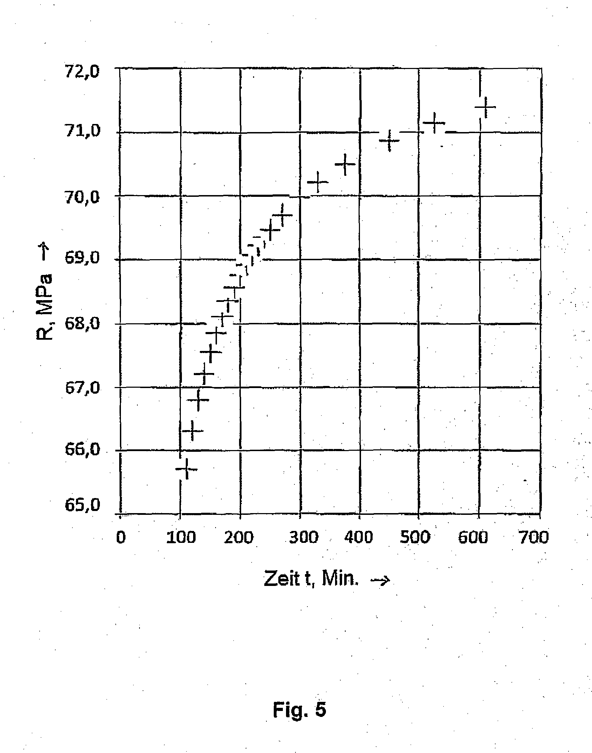

Das erfindungsgemäße Verfahren mit der Anwendung der Messmittel 1 zur Messung von räumlichen Schwingungen bedarf keiner Schlageinwirkungen und ist durch die Direktmessung der Prüfparameter der physikalischen Beschaffenheit realisiert. Dabei wird in der Richtung der Störwirkung eine sehr hohe Übereinstimmung der Messdaten nach dem erfindungsgemäßen Verfahren (Fig. 4) und nach den bekannten (indirekten) Verfahren beobachtet: Fig. 3 (Prototypverfahren) und Fig. 5 (konventionelles Verfahren).

Die Vergleichsversuche haben die Möglichkeit bzw. die Zweckmäßigkeit der Anwendung des erfindungsgemäßen Verfahrens bei der Forschung des Festigkeitsverlaufs während der Fertigung (Materialerhärtung) und danach während der Betriebsbeobachtung ebenfalls bestätigt. Aufgrund der Federkraft des Mediums werden von der Hauptwelle andersherum ausgerichtete Wellen gebildet. Es handelt sich dabei insbesondere um die X-Y-Ebene, die senkrecht zur Störwirkungsrichtung liegt. Die Schwingungen in der X-Y-Ebene sind von den elastischen Härten der Mediumsubstanz abhängig: Während der Erhärtung nimmt die Festigkeit zu, und die Teilchenverschiebung nimmt ab.

Die Anwendung des Messmittels 1 zur Messung der räumlichen Schwingungen erlaubt, nicht nur die Parameter der Längswellen in der Störwirkungsrichtung Z zu ermitteln, sondern auch ein räumliches Monitoring der elastischen Härten in der Scherebene X-Y senkrecht zur genannten Einwirkung, nämlich in der Hauptrichtung der konstruktionsmäßigen Betriebsfestigkeit des Gegenstands durchzuführen. Dabei erlaubt die Lage des Messpunkts E (dieser ist nämlich eine Asymptote des Signals der Zeitverformung X auf der Verlaufsmesskurve der Zeitverschiebung, Fig. 4) in Bezug auf die Grenzen der elastischen, elastisch-plastischen und Grenzzustands-Bereiche (OAB, ACHB und CH) auf dem räumlichen dreidimensionalen Diagramm der physikalischen Beschaffenheit des zu beobachtenden Gegenstands (Fig. 1), über die Parameter einer Restnutzungsdauer der konstruktionsmäßigen Festigkeit in Echtzeit und begründet zu beurteilen. Das ist bei der Errichtung und dem Betrieb von solchen technisch hochgefährdeten Objekten, wie Atomkraftwerkfundamenten, einschienigen Versorgungsleitungen, Seilkonstruktionen und -anlagen, Start- und Landebahnen, Tragewerken, Überbauten, Staudämmen, Brücken, Tunnel, Masten, unterirdischen Verkehrsanlagen und allen Monolith-Hochkonstruktionen, sehr wichtig.

Eine andere praktische Bestätigung des Nutzeffekts des erfindungsgemäßen Verfahrens ist die Möglichkeit, die Zuverlässigkeit bei der Ermittlung von Korrekturmassen und ihre Übereinstimmung mit einem ausgleichbaren Anteil einer verteilten Nichtausgeglichenheit der Wellenleitung (Massenverteilung) anhand einer präzisen Ermittlung der räumlichen Ausrichtung des Vektors und der Größe der Absolutschwingung unmittelbar zu steigern. Dabei spiegelt die Verschieberichtung des Messpunkts zum Koordinatenursprung auf dem dreidimensionalen räumlichen Diagramm der physikalischen Beschaffenheit des zu beobachtenden Gegenstands in einem Messpunkt von der Verringerung der Nichtausgeglichenheit in der beobachteten Korrekturebene wider. Die Auswuchtung der Wellenleitung mit sechsfacher Leitung einer Energie GTU-100-3 mit einer Leistung von 100 MW unter Einsatz des neuen Verfahrens ermöglichte es, das Flattern (Vibration) der Leitungen in allen Messrichtungen 2- bis 2,5-fach unterhalb der Norm gemäß PTE und GOST 25364 - 98 für den Dauerbetrieb pro eine Iteration zu vermindern. Dadurch entfallen die Korrekturstarts, die für diese Maschinenklasse üblich sind.

Das Verfahren wurde auch in der Praxis eines dreidimensionalen Bildes der physikalischen Beschaffenheit der Stützen eines Turbinensatzes T-250/300-240 in einem Messpunkt nachgewiesen. Neben der konventionellen Darstellung (Tabellen, Spektralkennlinien und Polardiagramme) wurde zum ersten Mal eine. neue Visualisierungsart der Vibrationen, und zwar der Laufbahn (Hodographen) der Messpunkte in der Projektion auf orthogonale Ebenen der kartesischen Koordinaten des Messmittels 1 zur Messung von räumlichen Schwingungen realisiert. Der räumliche Hodograph eines Messpunkts, nämlich die Rekonstruktion eines dreidimensionalen Bildes der physikalischen Beschaffenheit, kann anhand der Projektionsparameter mühelos wiedergegeben werden,

Die Analyse der Konturbeschaffenheiten der Konstruktionen und Schwingungsformen in vorbestimmten Kontrollpunkten der Absolutvibration erlaubte es, den aktuellen Vibrationszustand möglichst vollständig und präzise zu beurteilen, die Veränderung der messbaren Vibrationseigenschaften (Schwingungsformen und Laufbahnen in den Ebenen sowie im Raum) der Bauelemente sowie ihre tatsächliche Wechselwirkung untereinander zu verfolgen und die Schwächungen im Tragewerk des Turbinensatzes zu erkennen. Aufgrund der gemessenen Parameter wurden ihre entsprechenden analytischen Spannungsparameter ermittelt, welche die Einwirkungen eindeutig kennzeichnen. Die Vorteile der vektoriellen Messung zwecks vibrationsbezogener Einrichtarbeiten, Diagnose und Auswuchtung der Triebwerke der Wärmeenergieobjekte wurden nachgewiesen.

Der technisch-wirtschaftliche Vorteil des neuen Verfahrens im Vergleich zum Prototyp ist die Erhöhung der Aussagekraft und der Gültigkeitsbewertung der physikalischen Beschaffenheit der zu beobachtenden Gegenstände dank einer Rekonstruktion der zeitlich gebundenen mehrdimensionalen Bilder der Prüfparameter der physikalischen Zustände. Darüber hinaus führt das neue Verfahren eine apparategestütze Möglichkeit der Wiedergabe der aktuellen Restnutzungsdauer der konstruktionsmäßigen Festigkeit des zu beobachtenden Gegenstands zum ersten Mal in Echtzeit aus.

## Patentansprüche

1. Verfahren zur Rekonstruktion eines dreidimensionalen Bildes der physikalischen Beschaffenheit eines zu beobachtenden Gegenstands in einem Messpunkt, mit Messung mit Hilfe von wenigstens einem Messmittel zur Messung räumlicher Schwingungen, welches drei orthogonale Projektionen eines Beschleunigungsvektors synchron misst, und die Ermittlung eines vollständigen Spektrums von Frequenz-Amplituden- und Phasen-Daten über einen Verformungszustandsvektor des zu beobachtenden Gegenstands in einem Messpunkt, eine Erfassung eines Felds von Verformungsvektorgrößen und eine Darstellung eines visuellen Bildes der räumlichen Verformungen in Messpunkten auf einem Bildschirm umfasst, **dadurch gekennzeichnet,**
**dass** die Daten über das Verformungsvektorspektrum vor der Darstellung des visuellen Bildes auf dem Bildschirm in eine Einheit (7) für Spannungsdehnungs-Korrelationen eingegeben werden,
**dass** in der Einheit (7) für Spannungsdehnungs-Korrelationen die analytische Synthese einer 3D-Überlagerung des Spannungsfelds anhand festlegender Gleichungen für eine Ursache-Wirkungs-Beziehung der Kenngrößen der Grundsätze der Mechanik, wobei die Ursache Wirkungskräfte und/oder Wirkungsmomente entsprechend einer Spannung (σ) und die Wirkung als Reaktion auf die Spannung (σ) die mit dem Messmittel (1) gemessenen Verformungen (ε, _{T}) sind, gleichzeitig mit Messungen vorgenommen wird, wobei die analytische Synthese der 3D-Überlagerung des Spannungsfelds durch das Hookesche und das Poissonsche Gesetz für einen Messfühler des Messmittels (1) zur Messung von räumlichen Schwingungen begründet ist, und wobei diese analytische Synthese mittels einer Umkehr-Tensortransformation der 3D-Überlagerung des Messbereichs vorgenommen wird,
**dass** danach das Feld der Vektor-Spannungsgrößen erfasst und das visuelle Bild in Form von einem räumlichen dreidimensionalen Diagramm der physikalischen Beschaffenheit des zu beobachtenden Gegenstands in einem Messpunkt auf dem Bildschirm einer Recheneinheit dargestellt wird und
**dass** eine Diagnose des Spannungsdehnungsverhaltens des zu beobachtenden Gegenstands anhand dieses Diagramms durchgeführt wird.

## Claims

1. Method for the reconstruction of a three-dimensional image of the physical nature of an observed object in a measuring point, whereby the measurement is carried out with the aid of at least a measuring means for measuring spatial oscillations, whereby the means measure three orthogonal projections of an acceleration vector in synchronism, and for the determination of a complete spectrum of frequency-amplitude and phase data via a deformation condition vector of the observed object in a measuring point, comprising determination of an array of deformation vector magnitudes and representation on a screen of a visual image of the spatial deformations in measuring points,
**characterized in that**
- the data on the deformation vector spectrum are input before the representation of the visual image on the screen in a unit (7) for stress-strain correlations,
- in the unit (7) for stress-strain correlations, the analytic synthesis of a 3D superposition of the stress array based on equations to determine a cause-effect relationship of the parameters according to the principles of mechanics, whereby the cause-effect forces and/or moments corresponding to a stress (σ) and the effect in response to the stress (σ), are the deformations (ε, τ) measured with the measuring means (1), which is carried out simultaneously with measurements, whereby the analytical synthesis of the 3D superposition of the stress field according to Hooke's and Poisson's law for a measuring sensor of the measuring means (1) to measure the spatial oscillations, and whereby the analytical synthesis is carried out by a reverse tensor transformation of the 3D superposition of the measuring range, whereby
- after the array of vector stress magnitudes is determined and the visual image in the form of a spatial three-dimensional diagram of the physical nature of the observed object in a measurement point is represented on the screen of a computing unit
- a diagnosis of the stress-strain behaviour of the object to be observed is carried out on the basis of this diagram.

## Revendications

1. Procédé permettant la reconstruction d'une image tridimensionnelle de la structure physique d'un objet à observer dans un point de mesure, comportant la mesure à l'aide d'au moins un moyen de mesure destiné à mesurer des oscillations spatiales, lequel mesure de manière synchrone trois projections orthogonales d'un vecteur d'accélération, et la détermination d'un spectre complet de données de fréquences, d'amplitudes et de phases sur un vecteur d'état de déformation de l'objet à observer dans un point de mesure, une détection d'un champ de grandeurs de vecteurs de déformation et une représentation sur un écran d'une image visuelle des déformations spatiales dans les points de mesure, **caractérisé**
**en ce que** les données relatives au spectre de vecteurs de déformation sont entrées dans une unité (7) pour des corrélations de contrainte et allongement avant la représentation de l'image visuelle sur l'écran,
**en ce que** la synthèse analytique d'une superposition 3D du champ de contraintes à l'appui d'équations définies pour une relation de cause à effet des grandeurs caractéristiques des principes de mécanique, dans laquelle la cause en tant que forces d'action et/ou moments d'action conformément à une contrainte (σ) et l'effet en tant que réaction à la contrainte (σ) sont les déformations (ε, T) mesurées avec le moyen de mesure (1), est effectuée simultanément avec les mesures dans l'unité (7) pour les corrélations de contrainte et allongement, la synthèse analytique de la superposition 3D du champ de contraintes étant justifiée par la loi de Hooke et la loi de Poisson pour un capteur de mesure du moyen de mesure (1) pour mesurer des oscillations spatiales, et cette synthèse analytique étant effectuée au moyen d'une transformation inverse du tenseur de la superposition 3D de la zone de mesure,
**en ce que**, ensuite, le champ des grandeurs du vecteur de contrainte est enregistré et l'image visuelle est représentée, sur l'écran d'une unité de calcul, sous la forme d'un diagramme tridimensionnel dans l'espace de la structure physique de l'objet à observer dans un point de mesure, et
**en ce qu'**un diagnostic du comportement de contrainte et allongement de l'objet à observer est effectué à l'appui de ce diagramme.
